# FASCICULE DE BREVET EUROPEEN

(11) **EP 0 520 907 B1**
(45) Date de publication et mention de la délivrance du brevet: **06.09.1995**
(21) Numéro de dépôt: 92401819.5
(22) Date de dépôt: 26.06.1992
(51) Int. Cl.: B24C 1/04, B24C 11/00, B24C 9/00, B26F 3/00

(54) **Procédé et installation pour le traitement de surface ou la découpe par jet d'eau à haute pression**
Verfahren und Einrichtung für Oberflächenbehandlung oder Schneiden mittels eines Hochdruckwasserstrahls
Process and apparatus for surface treatment or cutting by high pressure water jet

(30) Priorité: 28.06.1991 FR 9108077
(43) Date de publication de la demande: 30.12.1992
(73) Titulaire: GEC ALSTHOM ACB, 75116 PARIS (FR)
(72) Inventeur: Freneix, Gérard, F-44230 Saint-Sebastien (FR)
(74) Mandataire: Gosse, Michel

(56) Documents cités:
- EP-A- 0 408 819
- EP-A- 0 420 787
- BE-A- 896 165
- FR-A- 2 127 021
- FR-A- 2 638 671
- WELDING AND METAL FABRICATION. vol. 59, no. 1, HAYWARDS HEATH GB pages 24 - 26; KIRKPATRICK: 'Water-jet cutting as a production process'
- MACHINE DESIGN. vol. 62, no. 9, 10 Mai 1990, CLEVELAND US pages 93 - 97; BURNHAM: 'ABRASIVE WATERJETS COME OF AGE' "A room catcher is......"
- M.HASHISH '8th INTERNATIONAL SYMPOSIUM ON JET CUTTING TECHNOLOGY - Aspects of Abrasive-Waterjet Performance Optimization' 11 Septembre 1986 , BHRA , CRANFIELD (UK)
- MECHANICAL ENGINEERING. vol. 106, no. 3, Mars 1984, NEW YORK US pages 60 - 69; M.HASHISH: 'CUTTING WITH ABRASIVE WATERJETS'

## Description

La présente invention concerne un procédé pour le traitement de surface ou la découpe par jet d'eau déminéralisée à haute pression dans lequel des particules abrasives sont mélangées au jet. Un tel procédé est connu de FR-A-2638 671.

La technique du jet d'eau à haute pression pour des opérations de maintenance, d'intervention et de démantèlement en environnement nucléaire présente de prime abord un certain nombre d'aspects intéressants :
- l'élévation de température de la pièce travaillée est faible, de ce fait, elle n'est pas déformée, les aérosols sont pratiquement inexistants,
- la température des projections est faible et celles-ci n'adhèrent donc que très peu sur les différentes surfaces,
- le volume, la masse et les forces de réaction de la tête d'outil sont faibles, ce qui permet une mise en oeuvre aisée de celle-ci.

Cependant, cette technique doit répondre aux exigences habituelles des interventions en environnement nucléaire en particulier :
- la non pollution de l'eau des piscines et des circuits,
- la non pollution des équipements, des cellules....,
- la non émission d'aérosols.

L'invention se propose ainsi d'apporter des aménagements qui permettent de satisfaire ces exigences.

L'invention a ainsi pour objet, un procédé pour le traitement de surface ou la découpe par jet d'eau déminéralisée à haute pression dans lequel des particules abrasives sont mélangées au jet, caractérisé par le fait que les particules abrasives sont des cristaux de dérivés solubles du bore.

D'autres avantages et caractéristiques de l'invention ressortiront de la description d'un exemple de mise en oeuvre de l'invention, faite ci-après en regard du dessin annexé dans lequel :
La figure 1 représente une installation pour la mise en oeuvre du procédé selon l'invention dans le cas où le jet d'eau n'est pas débouchant, cas d'un décapage, ou dans le le cas d'une découpe de pièce, si le dessous de la pièce n'est pas accessible.
La figure 2 représente une installation dans le cas d'une découpe de pièce.
La figure 3 représente un système de pompage dans le cas où le traitement de la pièce dans les installations selon les figures 1 et 2 est faite sous l'eau.
La figure 4 représente un système de pompage dans le cas où l'opération a lieu hors liquide, dans l'air ou d'une manière générale dans un gaz.

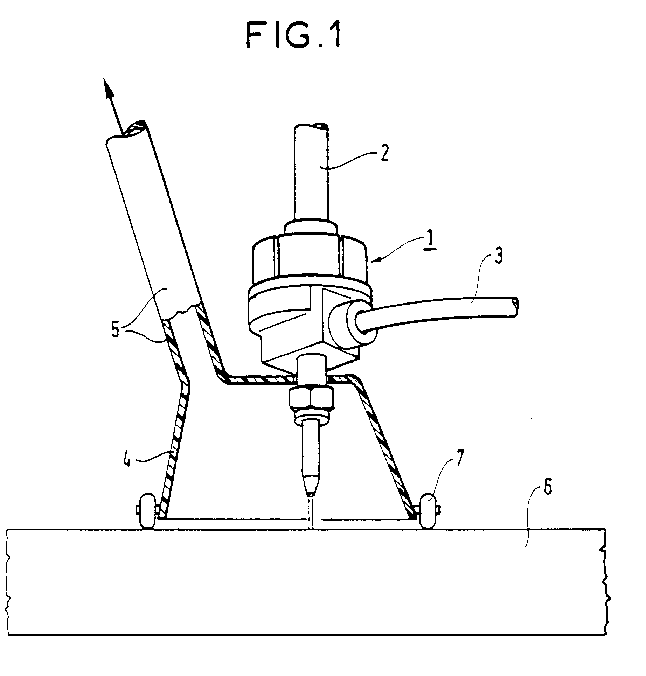

Sur la figure 1 on voit une buse d'injection 1 comportant une canalisation 2 d'injection d'eau à haute pression et une canalisation 3 pour l'alimentation en abrasif.

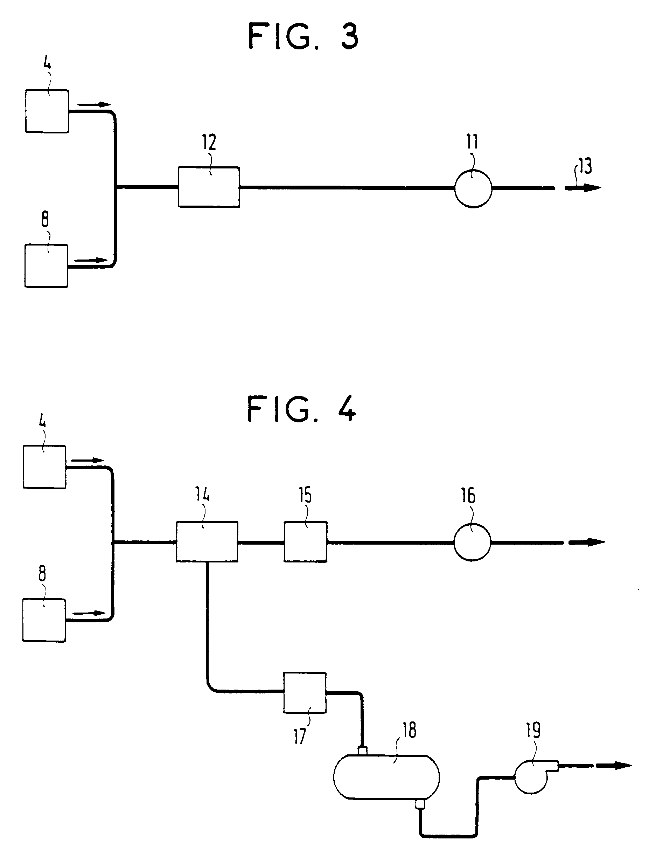

La buse d'injection est entourée d'un capotage 4 qui est revêtu intérieurement d'une couche d'un matériau dissipateur d'énergie telle qu'un élastomère par exemple. Le capotage 4 est relié par une sortie 5 à un système de pompage : soit au système représenté figure 3 dans le cas où l'opération exécutée sur la pièce 6 à traiter est faite sous l'eau, soit au système représenté figure 4 si l'opération est exécutée en milieu aérien, ou gazeux d'une manière générale.

L'extrémité inférieure du capotage comporte des entretoises 7 ou des roulettes permettant de maintenir le bon écartement entre le capotage et la pièce 6.

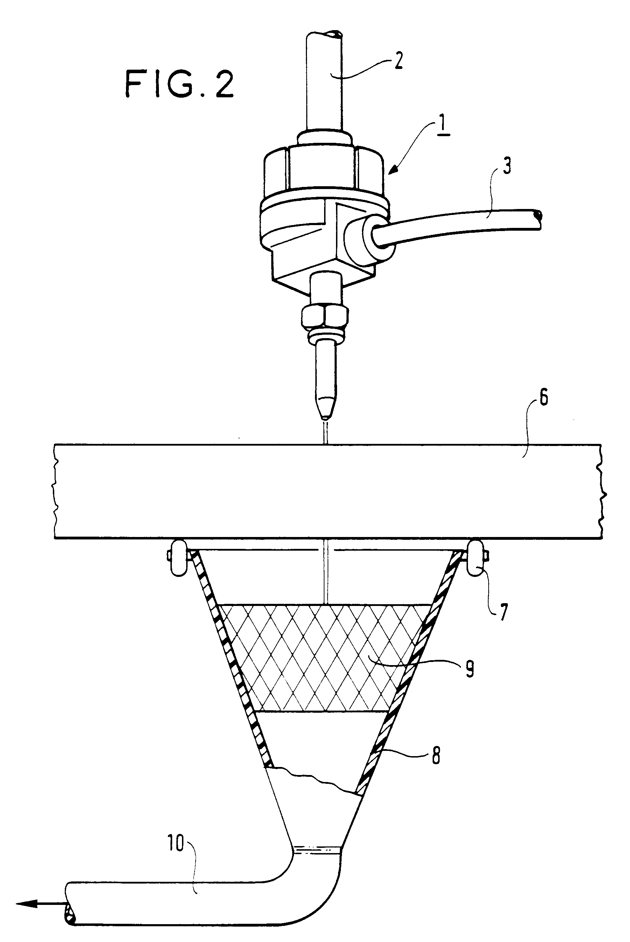

Ainsi, ce dispositif permet de récupérer la plus grande partie de l'eau de travail, de l'abrasif et des débris. Ce dispositif est avantageux particulièrement dans le cas de traitement de surface : décapage, sablage, etc.... lorsque le jet ne débouche pas sous la pièce. Cependant, ce dispositif est également intéressant dans le cas où la pièce 6 devant être découpée et le jet devant alors déboucher sous la pièce lorsque le dessous de la pièce n'est pas accessible et où on ne peut pas placer le système représenté sur la figure 2. Dans ce cas, les paramètres du procédé de découpe sont choisis de façon à ce que lors d'une première passe, la pièce 6 à découper n'est travaillée que sur une hauteur ne représentant que 90 à 99 % de la hauteur nécessaire à la coupe complète, ce qui permet de récupérer lors de cette première passe le fluide de travail et les débris solides. Lors d'une deuxième passe rapide on termine la coupe de la pièce, mais sur une très faible épaisseur, ce qui minimise la quantité des débris non récupérés.

Lorsque le dessous de la pièce est accessible et que l'on réalise un travail de découpe, on utilise le dispositif représenté sur la figure 2, éventuellement combiné avec celui de la figure 1.

Dans cette figure 1, on place sous la pièce, au droit du jet un entonnoir 8 dont l'intérieur est également revêtu d'une couche 9 d'un matériau dissipateur d'énergie. L'entonnoir 8 porte une sortie 10 reliée, comme dans le cas de la figure 1, soit au système de pompage de la figure 3 dans le cas d'un travail exécuté en immersion, soit au système de pompage de la figure 3 dans le cas d'un travail exécuté à l'air.

Dans le cas d'un travail en immergé (figure 3), le capotage 4, ou l'entonnoir 8, ou les deux, est relié à une pompe à liquide 11 précédée d'un filtre fin 12 qui permet de récupérer les débris et l'abrasif. L'eau filtrée 13 est retournée en piscine, ou mieux, transférée au circuit de traitement des effluents liquides de l'usine.

Dans le cas d'un travail en milieu aérien ou gazeux (figure 4), le capotage 4 ou l'entonnoir 8, ou les deux, est d'abord relié à un séparateur liquide-gaz 14. La sortie gaz est ensuite reliée à un filtre fin 15 puis à une pompe à vide 16. Le refoulement de la pompe à vide 16 est par exemple relié à l'entrée d'une gaine de ventilation.

La sortie liquide du séparateur liquide-gaz 16 est reliée à un second filtre fin 17, puis à une bâche 18 et à une pompe 19.

Dans le cas du nucléaire, l'utilisation du bore comme abrasif, lors d'intervention dans les piscines ou les circuits primaires des centrales nucléaires de type PWR notamment est particulièrement avantageuse.

Le fluide de travail utilisé est de l'eau déminéralisée et l'abrasif est constitué de cristaux de dérivés solubles du bore.

Cette solution est très intéressante car après le travail, l'eau déminéralisée et les cristaux se diluent dans le fluide des piscines ou des circuits primaires. Il n'y a pas de pollution car le fluide de travail et l'abrasif sont de même nature que le fluide d'environnement.

Dans ce cas, les dispositifs décrits précédemment, peuvent aussi être utilisés.

## Revendications

1. Procédé pour le traitement de surface ou la découpe par jet d'eau déminéralisée à haute pression dans lequel des particules abrasives sont mélangées au jet, caractérisé par le fait que les particules abrasives sont des cristaux de dérivés solubles du bore.

2. Procédé de découpe au jet d'eau selon la revendication 1, caractérisé en ce que l'on effectue d'abord une première passe au cours de laquelle la pièce à découper n'est entaillée que sur une hauteur comprise entre 90 et 99 % de la hauteur nécessaire à la découpe complète.

## Claims

1. A method for surface treatment or cutting by high-pressure demineralized water jet, in which method abrasive particles are mixed with the water jet, said method being characterized by the fact that the abrasive particles are crystals of soluble boron derivatives.

2. A water jet cutting method according to claim 1, characterized in that a first pass is made during which the workpiece to be cut is cut only over a height lying in the range 90% to 99% of the height required for cutting right through the workpiece.

## Patentansprüche

1. Verfahren zur Oberflächenbearbeitung oder zum Zerschneiden eines Werkstücks mit einem Hochdruckstrahl entmineralisierten Wassers, wobei Abriebpartikel dem Strahl beigemengt werden, dadurch gekennzeichnet, daß die Abriebpartikel Kristalle von löslichen Borderivaten sind.

2. Schneideverfahren mit einem Wasserstrahl nach Anspruch 1, dadurch gekennzeichnet, daß in einem ersten Durchgang das zu durchschneidende Werkstück nur bis zu einer Tiefe von 90 bis 99% der für einen vollständigen Schnitt erforderlichen Tiefe eingeschnitten wird.
